# EUROPÄISCHE PATENTANMELDUNG

(11) **EP 1 029 987 A1**
(43) Veröffentlichungstag der Anmeldung: **23.08.2000**
(21) Anmeldenummer: 99103247.5
(22) Anmeldetag: 19.02.1999
(51) Int. Cl.: E03B 7/07

(54) **Hausanschluss an die öffentliche Wasserversorgung**

(71) Anmelder: Pfitzner, Heinz-Jürgen, 67550 Worms (DE)
(72) Erfinder: Pfitzner, Heinz-Jürgen, 67550 Worms (DE)
(74) Vertreter: Nix, Frank Arnold, Dr.

(57) **Zusammenfassung**

Der vorgeschlagene Hausanschluß an die öffentliche Wasserversorgung hat ein Rückschlagventil 12, welches im unzugänglichen unterirdischen Bereich zwischen dem an der öffentlichen Wasserleitung 1 installierten Hausanschlußschieber 5 und der Hausanschlußleitung 3 angeordnet ist und die Einleitung von fremden Substanzen unmöglich macht.

## Beschreibung

Die vorliegende Erfindung bezieht sich auf die öffentliche Wasserversorgung und deren Sicherheit vor Sabotageanschlägen durch kriminelle Elemente. In jüngerer Zeit sind mehrfach Versuche bekannt geworden, durch Anschläge auf öffentliche Einrichtungen, z.B. den öffentlichen Personenverkehr, große Summen von den Betreibern zu erpressen und eine der sich hier bietenden Möglichkeiten ist die Androhung der Einleitung von Schadstoffen, Krankheitserregern, oder Giften in das öffentliche Wasserversorgungsnetz.

Das öffentliche Wasserversorgungsnetz ist zunächst über die insbesondere der Feuerwehr zur Verfügung stehenden Hydranten zugänglich, deren Sabotagesicherheit in diesem Zusammenhang von erheblicher Bedeutung ist, vorliegend jedoch nicht angesprochen wird. Ein weiteres Gefahrenpotential ist dadurch gegeben, dass durch Anwendung von den Netzdruck übersteigendem Überdruck die Fließrichtung umgekehrt und aus jedem an die Wasserversorgung angeschlossenen Gebäude Schadstoffe eingeleitet werden könnten.

Zur Minimierung der Gefahr der Begehung solcher Untaten wird erfindungsgemäß vorgeschlagen, zwischen dem Hausanschlußschieber an der öffentlichen, meist im Straßenverlauf unterirdisch verlegten Wasserleitung und der in das Gebäude zum Übergabepunkt führenden Hausanschlußleitung ein Rückschlagventil anzuordnen, und zwar im nicht zugänglichen unterirdischen Bereich, vorzugsweise in der Nähe des Hausanschlußschiebers oder unmittelbar an diesem.

Weitere Ausgestaltungen der Erfindung sind in den Patentansprüchen angegeben.

Nachfolgend wird die Erfindung durch die Beschreibung von fünf Ausführungsbeispielen anhand der beigegebenen Zeichnungen weiter erläutert. Es zeigt:
- Fig. 1: schematisch einen Hausanschluß an die öffentliche Wasserversorgung mit einem Rückschlagventil einer ersten Ausführungsform;
- Fig. 2: den Längsschnitt des Rückschlagventils gemäß Fig. 1;
- Fig. 3: den Querschnitt gemäß Linie III-III in Fig. 2;
- Fig. 4: ein Rückschlagventil einer zweiten Ausführungsform im Längsschnitt;
- Fig. 5: ein Rückschlagventil einer dritten Ausführungsform im Längsschnitt;
- Fig. 6: den Querschnitt gemäß Linie VI-VI in Fig. 5;
- Fig. 7: ein Rückschlagventil einer vierten Ausführungsform im Längsschnitt;
- Fig. 8: ein Rückschlagventil einer fünften Ausführungsform im Längsschnitt;
- Fig. 9: einen Hausanschluß mit einem Rückschlagventil einer sechsten Ausführungsform;
- Fig. 10: das Rückschlagventil gemäß Fig. 9 im Längsschnitt.

Die Leitung 1 der öffentlichen Wasserversorgung ist unterirdisch, meist im Straßenbereich verlegt, und die zu einem Verbraucher führende Hausanschlußleitung 3 ist mittels eines Hausanschlußschiebers 5 angeschlossen, meist in der Weise, dass der Hausanschlußschieber mittels einer Schelle 7 an der Leitung 1 fixiert wird und eine mit ihm kombinierte Anbohrkrone 9 die Öffnung zur Wasserentnahme herstellt. Die Hausanschlußleitung 3 verläuft ebenfalls unterirdisch bis in den Keller des betreffenden Gebäudes, wo möglichst nahe der straßenwärts gelegenen Hauswand die Übergabestelle installiert ist, deren erste Armatur ein Zählereingangsventil ist. An dieses schließt sich der Wasserzähler und hinter diesem ein Zählerausgangsventil an, welche bereits zur Hausinstallation gehören.

Die Besonderheit des vorliegenden Hausanschlusses ist ein im Verlauf der Hausanschlußleitung 3 vorgesehenes Rückschlagventil 12 und dessen Anordnung im nicht zugänglichen unterirdischen Bereich des Hausanschlußschiebers oder in dessen Nähe. Das Rückschlagventil kann auf beliebige geeignete Weise in den Strang der Hausanschlußleitung 3 eingefügt sein, beispielsweise durch Verschraubungen oder mittels Flanschanschlüssen; bei den vorliegend betrachteten Ausbildungen werden verschweißte Verbindungen betrachtet. Nachdem die überwiegende Mehrzahl von Hausanschlüssen aus Polyethylen, nämlich PE HD oder PEX hergestellt sind, wird diese Technik die bevorzugte sein.

Das Rückschlagventil 12 der ersten Ausbildungsform hat ein Gehäuse 14 aus zwei Hälften 16 und 18, die mittels einer aufgeschweißten Verbindungsmuffe 20 miteinander verbunden sind. Die Eintrittsgehäusehälfte 16 ist einstückig mit einem Eintrittsstutzen 22 ausgebildet, welcher mittels einer Aufschweißmuffe 24 mit dem Hausanschlußschieber 5 verbunden ist. Die Austrittsgehäusehälfte 18 ist einstückig mit einem Austrittsstutzen 26 ausgebildet, welcher mittels einer Aufschweißmuffe 28 mit der weiterführenden Hausanschlußleitung 3 verbunden ist.

Im wesentlichen sind beide Gehäusehälften zusammengesetzt aus einem zylindrischen und einem kegelstumpfförmigen Abschnitt, wobei an der Innenfläche des kleinen Kegelstumpfendes der Eintrittsgehäusehälfte 16 eine Dichtung 30 für eine Ventilkugel 32 angeordnet ist.

In beiden Gehäusehälften sind von der Innenfläche ausgehende radiale Rippen 34, 36 ausgebildet, zwischen deren achsparallelen Stirnflächen die Ventilkugel 32 geführt ist. Die Rippen 36 der Austrittsgehäusehälfte 18 haben einen Absatz 38 in Form eines rechtwinkligen Einsprungs ihrer Stirnflächen auf einen kleineren Durchmesser. Auf diesen Absätzen liegt ein Stützring 40 für eine verhältnismäßig schwache Feder 42, deren anderes Ende auf einen Andrückschuh 44 wirkt, welcher mit einer der Ventilkugel 32 zugewandten konkaven Fläche diese in Richtung der Dichtung 30 beaufschlagt.

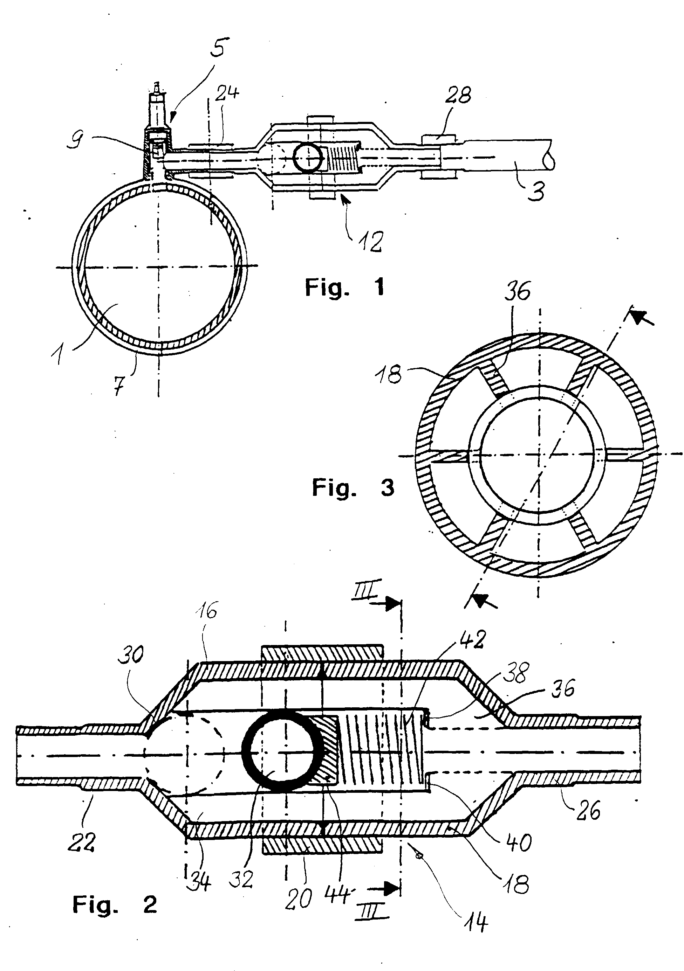

Im Ruhezustand ist die Ventilkugel 32 von der Feder 42 schwach auf die Dichtung 30 gedrückt, wie dies in Fig. 2 gestrichelt gezeigt ist. Sollte versucht werden, aus dem über die Hausanschlußleitung 3 versorgten Gebäude fremde Substanzen mittels Überdruck in die öffentliche Wasserleitung 1 einzuleiten, so würde die Ventilkugel 32 nur fester auf ihren Dichtungssitz gedrückt werden und dies verhindern. Wird im Gebäude Wasser entnommen, so fällt der Druck hinter der Ventilkugel und diese wird durch den Überdruck in der Wasserleitung 1 vom Sitz abgehoben und das Rückschlagventil öffnet, wie in Fig. 2 gezeigt. Das Wasser strömt zwischen die Radialrippen 34 und 36, umströmt die Ventilkugel 32 und tritt durch den Austrittsstutzen 26 über in die Hausanschlußleitung 3. Wegen der verhältnismäßig schwachen Feder 42 treten keine wesentlichen Drosselverluste auf.

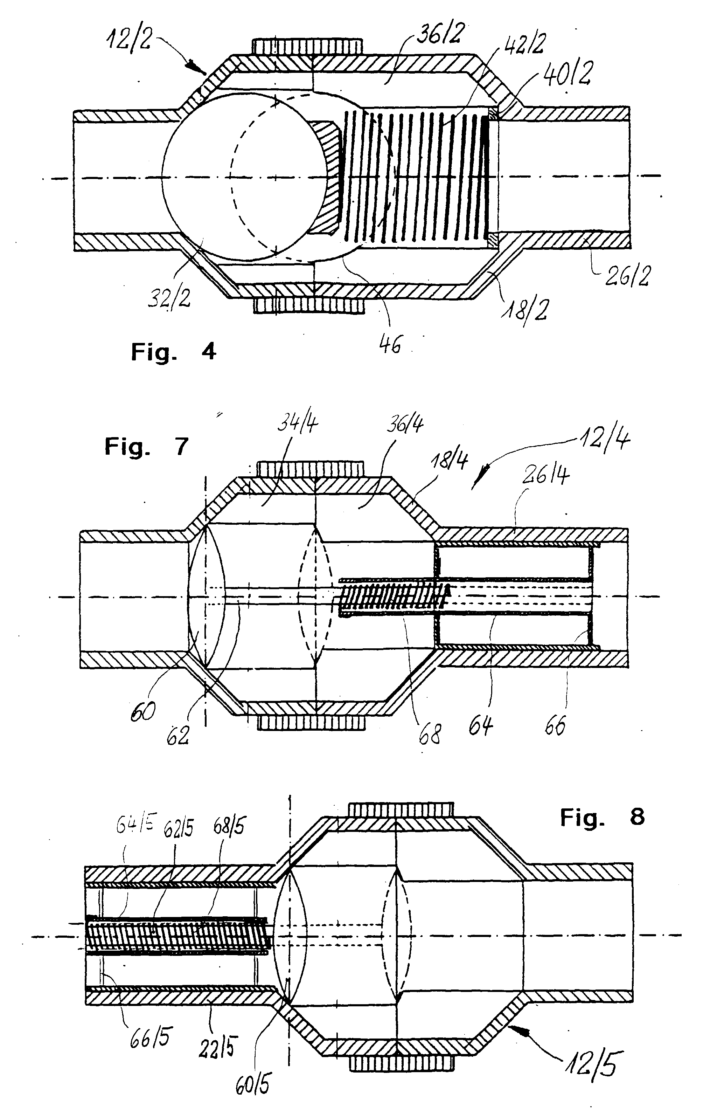

Die in Fig. 4 gezeigte zweite Ausbildungsform des Rückschlagventils 12/2 unterscheidet sich von der zuvor betrachteten Ausbildung nur dadurch, dass die Rippen 36/2 der Austrittsgehäusehälfte 18/2 auf der Anströmseite eine Ausrundung 46 aufweisen, welche im völlig geöffneten Zustand des Ventils als Anschlag der Ventilkugel 32/2 wirken, und dass der Stützring 40/2 der Feder 42/2 an der Übergangsstelle des Kegelstumpfabschnitts des Austrittsgehäuses 18/2 zum Austrittsstutzen 26/2 aufliegt. Es versteht sich, dass die Feder 42/2 auch im völlig komprimierten Zustand genügend Abstand zwischen ihren Windungen beläßt, damit das Wasser ohne wesentliche Strömungsverluste durchtreten kann.

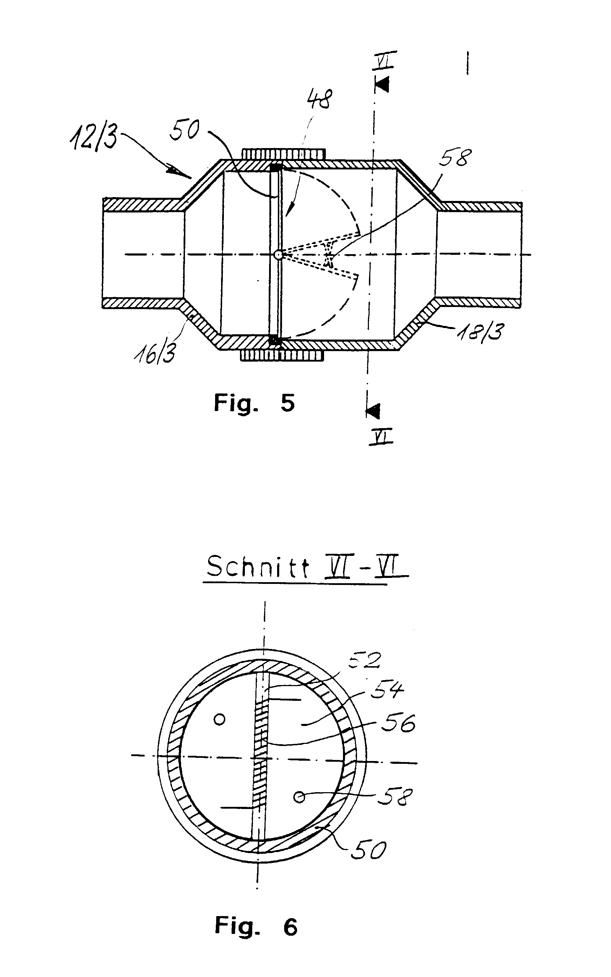

Das Rückschlagventil 12/3 der dritten Ausführungsform gemäß Fig. 5 und 6 besteht wiederum aus zwei Gehäusehälften 16/3 und 18/3, wobei zwischen diesen ein Ventilklappeneinsatz 48 eingespannt ist, der aus einem Ring 50 besteht, durch den diametral eine Schwenkachse 52 verläuft, an welcher zwei Halbkreisklappen 54 angelenkt sind. Eine auf die Schwenkachse 52 aufgeschobene Torsionsfeder 56 beaufschlagt mit ihren Endarmen jeweils eine der Halbkreisklappen 54 im Sinne des Schließens und Andrückens an den jeweiligen Halbumfang des Rings 50, der mit einer Weichdichtung beschichtet ist. Von den Rückenflächen der Halbkreisklappen 54 ragen Abstandspfosten 58 auf, welche im voll geöffneten Zustand des Rückschlagventils zur Anlage an der Rückenfläche der jeweils anderen Klappe kommen und diese gegeneinander stabilisieren.

Es ist zu sehen, dass auch diese Ausbildung als verlustarmes Rückschlagventil wirkt, in dem bei einer Wasserentnahme die Halbkreisklappen 54 entgegen der Wirkung der Torsionsfeder 56 vom strömenden Wasser geöffnet werden, im Ruhezustand jedoch dichtend an ihren jeweiligen Umfangsbereich des Rings 50 angedrückt sind und eine Rückströmung verhindern.

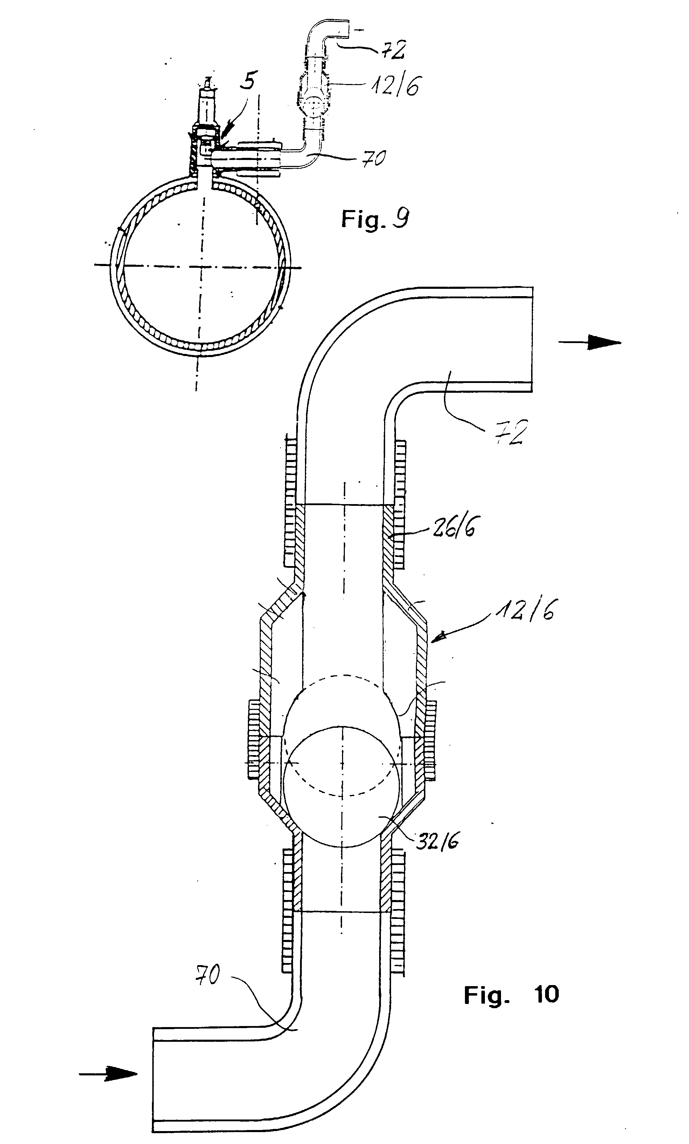

Das Rückschlagventil 12/4 der vierten Ausbildungsform gemäß Fig. 7 unterscheidet sich von dem der ersten und zweiten Ausbildung im wesentlichen dadurch, dass das Ventilschließglied nicht eine Kugel, sondern ein Ventilteller 60 ist, der mit einem Schaft 62 verbunden ist, welcher in ein Führungsrohr 64 ragt, das im Austrittsstutzen 26/4 der Austrittsgehäusehälfte 18/4 von speichenartigen Haltestäben 66 gehalten ist.

Zwischen der Innenfläche des Führungsrohrs 64 und dem Ventilschaft 62 ist auf diesen eine Zugfeder 68 aufgeschoben, deren vorderes Ende am Rand des Führungsrohrs 64 eingehängt ist und dessen hinteres Ende mit dem Ende des Ventilschafts 62 verbunden ist, sodass dieser in Richtung des Schließens beaufschlagt ist.

Es ist zu sehen, dass im Ruhezustand die geschlossene, in Fig. 7 in ausgezogenen Linien gezeigte Schließstellung eingenommen wird und bei einer Wasserentnahme das Ventil öffnet und der Ventilteller sich in die gestrichelt gezeigte Lage bewegt, sodass das Wasser diesen durch die Räume zwischen den Rippen 34/4 und 36/4 umströmen kann.

Das Rückschlagventil 12/5 der fünften Ausführungsform gemäß Fig. 8 unterscheidet sich von dem der vierten Ausführungsform nur dadurch, dass der Schaft 62/5 des Ventiltellers 60/5 zur anderen Seite gerichtet ist, nämlich in den Eintrittsstutzen 22/5 ragt und demgemäß in diesem das von Haltestäben 66/5 gehaltene Führungsrohr 64/5 angeordnet ist. Die Zugfeder 68/5 ist mit ihrem einen Ende am anströmseitigen Ende des Führungsrohrs 64/5 ein gehängt und mit dem anderen Ende auf geeignete Weise am Ventilteller 60/5 oder in dessen Nähe am Schaft 62/5 befestigt.

Fig. 9 und 10 zeigen eine Lösung mit einem Rückschlagventil 12/6 ohne Federbeaufschlagung. Das hier verwendete Rückschlagventil entspricht weitgehend dem der zweiten Ausführungsform und unterscheidet sich von diesem im wesentlichen nur durch das Fehlen der Feder und des Andrückschuhs. Die Federwirkung ist hier ersetzt durch die Gewichtskraft der Ventilkugel 32/6 und hierzu ist das Rückschlagventil 12/6 in senkrechter Lage eingebaut. Ein erster Rohrbogen 70 zwischen dem Hausanschlußschieber 5 und dem Rückschlagventil 12/6 lenkt den Verlauf in die Senkrechte um und ein zweiter Gegenbogen 72 stellt die Verbindung des Rückschlagventilaustrittsstutzen 26/6 mit der weiterführenden waagerechten Hausanschlußleitung 3 her. Es ist zu sehen, dass auch hier eine zuverlässige Rückflußverhinderung verwirklicht ist.

### BEZUGSZEICHENLISTE

- 1: Wasserleitung
- 3: Hausanschlußleitung
- 5: Hausanschlußschieber
- 7: Schelle
- 9: Anbohrkrone
- 12: Rückschlagventil
- 14: Gehäuse
- 16: Gehäusehälfte
- 18: Gehäusehälfte
- 20: Verbindungsmuffe
- 22: Eintrittsstutzen
- 24: Aufschweißmuffe
- 26: Austrittsstutzen
- 28: Aufschweißmuffe
- 30: Dichtung
- 32: Ventilkugel
- 34: Radialrippe
- 36: Radialrippe
- 38: Absatz
- 40: Stützring
- 42: Feder
- 44: Andrückschuh
- 46: Ausrundung
- 48: Ventilklappeneinsatz
- 50: Ring
- 52: Schwenkachse
- 54: Halbkreisklappe
- 56: Torsionsfeder
- 58: Abstandspfosten
- 60: Ventilteller
- 62: Schaft
- 64: Führungsrohr
- 66: Haltestab
- 68: Zugfeder
- 70: Rohrbogen
- 72: Gegenbogen

## Patentansprüche

1. Hausanschluß an die öffentliche Wasserversorgung mit einem an die unterirdisch verlegte öffentliche Wasserleitung (1) angeschlossenen Hausanschlußschieber (5) und einer zur Übergabestelle im Verbrauchergebäude führenden Hausanschlußleitung (3),
dadurch gekennzeichnet, dass zwischen dem Hausanschlußschieber (5) und der Hausanschlußleitung (3) im nicht zugänglichen unterirdischen Bereich ein Rückschlagventil (12) angeordnet ist.

2. Hausanschluß nach Anspruch 1, dadurch gekennzeichnet, dass das Schließelement des Rückschlagventils eine federbeaufschlagte Kugel (32) ist, die auf einen Dichtsitz (30) im Ventilgehäuse (14) gedrückt ist.

3. Hausanschluß nach Anspruch 1, dadurch gekennzeichnet, dass die Einbaulage des Rückschlagventils eine senkrechte Komponente der Bewegung des Ventilschließglieds (32/6) zur Folge hat und dieses durch sein Gewicht in Richtung des Schließens beaufschlagt ist.

4. Hausanschluß nach Anspruch 1 oder 2, dadurch gekennzeichnet, dass das Ventilgehäuse (14) rotationssymmetrisch ausgebildet ist und von einer Innenfläche radiale Rippen (34, 36) ausgehen, deren achsparallele Stirnflächen als Führungsflächen der Ventilkugel (32) wirken.

5. Hausanschluß nach einem oder mehreren der vorhergehenden Ansprüche, dadurch gekennzeichnet, dass die Rippen (36) einen Absatz (38) aufweisen, auf den sich das eine Ende der die Ventilkugel (32) beaufschlagenden Feder (42) abstützt.

6. Hausanschluß nach Anspruch 1, dadurch gekennzeichnet, dass das Rückschlagventil (12/3) zwei mittels einer Torsionsfeder (56) beaufschlagte Halbkreisklappen (54) aufweist, die an einer diametral verlaufenden Schwenkachse (52) angelenkt sind.

7. Hausanschluß nach Anspruch 6, gekennzeichnet durch Abstandspfosten (58) auf den Rückenflächen der Halbkreisklappen (54).

8. Hausanschluß nach Anspruch 1, dadurch gekennzeichnet, dass das Schließelement des Rückschlagventils (12/4; 12/5) ein federbeaufschlagter Ventilteller (60, 60/5) ist, der mit einem in einem Führungsrohr (64, 64/5) geführten Schaft (62, 62/5) verbunden ist.

9. Hausanschluß nach Anspruch 8, dadurch gekennzeichnet, dass die den Ventilteller (60, 60/5) beaufschlagende Feder (68, 68/5) eine Zugfeder ist, die in einem Ringraum zwischen Ventilschaft (62, 62/5) und Führungsrohr (64, 64/5) angeordnet ist.
